# EUROPEAN PATENT APPLICATION

(11) **EP 2 704 363 A2**
(43) Date of publication of application: **05.03.2014**
(21) Application number: 12174105.2
(22) Date of filing: 28.06.2012
(51) Int. Cl.: H04L 12/26, H04L 12/70, H04L 12/933, G06F 11/10

(54) **Transmitting device, transceiver system, and control method**

(30) Priority: 02.08.2011 JP 2011169657
(71) Applicant: FUJITSU LIMITED, Kawasaki-shi, Kanagawa 211-8588 (JP)
(72) Inventor: Kitamura, Yasuhiro, Kawasaki-shi, Kanagawa 211-8588 (JP)
(74) Representative: Fenlon, Christine Lesley

(57) **Abstract**

An I/O controller (20) that is connected to a I/O controller (20a) via a transfer path. The I/O controller (20) includes a buffer (22) including a plurality of entries that stores data to be transmitted to the I/O controller (20a). The I/O controller (20) includes a tag checker (29) that detects final data to be transmitted to the I/O controller (20a) among the data stored in the entries in the buffer (22). The I/O controller (20) includes a PRBS generator (36) that generates test data for testing the transfer path and the I/O controller (20a), when the tag checker (29) detects the final data. The I/O controller (20) includes a SerDes macro (39) that transmits the test data generated by the PRBS generator (36) to the I/O controller (20a), after transmitting the final data detected by the tag checker (29).

## Description

### FIELD

The embodiments discussed herein are directed to a transmitting device, a transceiver system, and a control method.

### BACKGROUND

In a conventional serial transfer technology for transmitting data of a width of one bit via a transfer path, a transfer evaluation is performed to verify the rate at which bit errors occur in the of transmitted data. As an example of such a transfer evaluation, a technology is known in which the occurrence of a disturbance in the real environment is reproduced by applying a load heavier than that applied during a normal state to each transfer path and then a transfer evaluation is performed on the transfer path.

As an example of such a technology, a transfer device is known in which, by using software, such as a test program (TP), the load on a transfer path is increased and then a transfer evaluation is performed on the transfer path. For example, when using the TP to perform a transfer evaluation, the transfer device sets the operating frequency of a serial conversion macro (SerDes: SERializer/DESerializer) to be higher than the operation frequency in a normal operation state. The transfer device increases the load of each transfer path to perform the transfer evaluation. The transfer device increases the load on each transfer path by, for example, generating an intentional bit error in data transmitted and then performs the transfer evaluation.

A technology is also known in which, by using hardware, such as a PRBS (pseudo-random bit sequence) generator, the load on a transfer path is increased and then a transfer evaluation is performed on the transfer path. For example, when using the PRBS generator to perform a transfer evaluation, the transfer device stops the normal data transfer operations, increases the load on a transfer path by maintaining an output of pseudo random numbers generated by the PRBS generator to the transfer path, and then performs a transfer evaluation.

However, the above-described technologies in which a transfer evaluation is performed have a problem in that, because a state different from the normal operation state is intentionally created, a high-quality transfer evaluation may not be performed.

For example, when the transfer device increases the operation frequency of a serial conversion macro, the timing width in which an opposing device appropriately acquires data from the transfer device is narrowed. In other words, an increase in the operation frequency shorten the total period of a setup time, which is a minimum time in which a data signal have to be fixed prior to a clock signal serving as reference timing, and a hold time, which is a time in which the data signal has to be stored even after the timing signal is given. As a result, when the operation frequency is increased, the transfer device detects more errors than those detected when the serial conversion macro of the opposing device, which receives data from the transfer device, transmits data at a normal operation frequency and accordingly high-quality transfer evaluations are not performed.

Furthermore, when the transfer device intentionally causes a bit error, any bit error that incidentally occurs is masked. In other words, the transfer device does not determine whether a bit error detected from the transmitted data is a bit error unintentionally occurring in a transfer path or a bit error intentionally generated, and therefore high-quality transfer evaluations are not performed.

Furthermore, for example, when the transfer device performs a transfer evaluation by using a PRBS output device, the transfer device stops normal data transfers and outputs a pattern generated by the PRBS output device to the transfer path. As a result, the transfer device stabilizes the pattern of the data flowing along the transfer path, and the pattern of the data flowing along the transfer path is thus different from that in the normal operation state, which means high-quality transfer evaluations are not performed.

When the transfer device transmits data via multiple transfer paths, it is preferable that the rate of use of each transfer path is uniform in order to accurately determine the effects of a given data pattern and the effect of a value to which a serial conversion macro is set. However, when the transfer device tests a transfer path by partly using the system including the transfer paths, the internal resources become a bottleneck and thus the rate of use of each transfer path are not uniform.

In addition, when the transfer device does not uniformize the rate of use of each transfer path, it becomes difficult to determine whether the detected error is an error due to the data pattern, is an error due to the volume of the transmitted data, or is an error due to the position of the transfer path.

The technology disclosed herein has been developed in order to solve the above-described problems and the technology allows high-quality transfer evaluations.

### SUMMARY

According to an embodiment of an aspect of the invention, a transmitting device is connected to a receiving device via a transfer path. The transmitting device includes storage unit that includes a plurality of entries to store data to be transmitted to the receiving device. The transmitting device includes a final data detecting unit that detects final data to be transmitted to the receiving device among the data stored in the entries in the storage unit. The transmitting device includes a test data generating unit that generates test data for testing the transfer path and the receiving device when the final data detecting unit detects the final data. The transmitting device includes a transmitter that transmits the test data generated by the test data generating unit to the receiving device, after transmitting the final data detected by the final data detecting unit.

### BRIEF DESCRIPTION OF DRAWINGS

FIG. 1 is a diagram illustrating an information processing system according to a first embodiment;
FIG. 2 is a diagram illustrating an exemplary I/O controller according to the first embodiment;
FIG. 3 is a table illustrating exemplary data transmitted by the I/O controller according to the first embodiment;
FIG. 4 is a table illustrating exemplary data transmitted by the I/O controller according to the first embodiment just before transmitting a dummy packet;
FIG. 5 is a table illustrating data transmitted by the I/O controller according to the first embodiment when ending the transmission of dummy data;
FIG. 6 is a diagram illustrating a process performed by a receiving I/O controller according to the first embodiment;
FIG. 7 is a diagram illustrating processes of transiting to a dummy mode performed by the I/O controllers according to the first embodiment;
FIG. 8 is a diagram illustrating processes of performing evaluation tests in a normal state on multiple transfer paths, which are processes performed by a CPU according to the first embodiment; and
FIG. 9 is a diagram illustrating flows of processes performed by the I/O controllers according to the first embodiment.

### DESCRIPTION OF EMBODIMENTS

Preferred embodiments of the present invention will be explained with reference to accompanying drawings.

### [a] First Embodiment

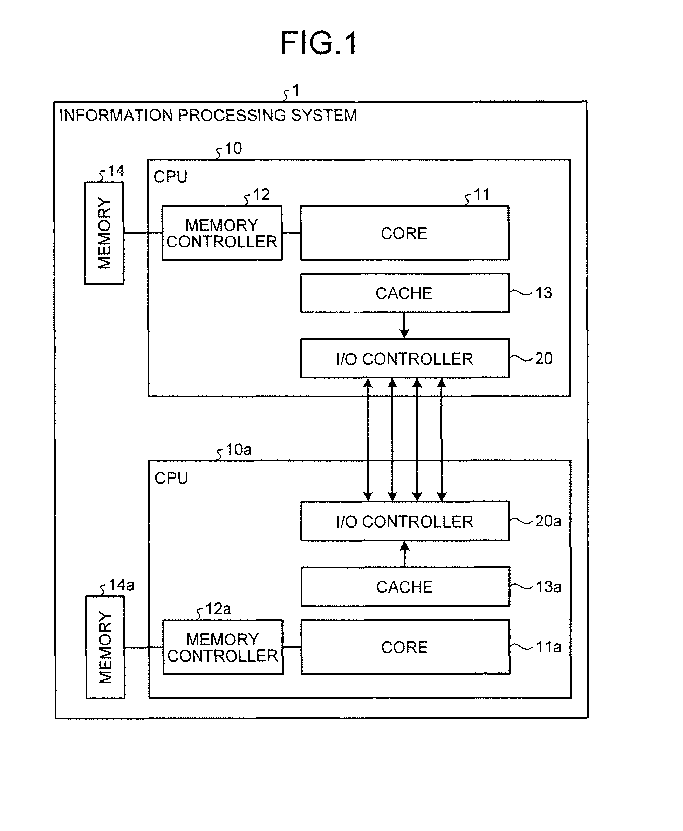

In the following first embodiment, an exemplary information processing system including a transfer system will be described using FIG. 1. FIG. 1 is a diagram illustrating an information processing system according to the first embodiment. An information processing system 1 is a system that includes at least multiple CPUs and in which each of the CPUs transmits/receives data via multiple serial transfer paths.

As depicted in FIG. 1, the information processing system 1 includes a CPU 10, a CPU 10a, a memory 14, and a memory 14a. The CPU 10 and the CPU 10a are connected via multiple serial transfer paths. The memory 14 is a memory that is connected to the CPU 10 and the memory 14a is a memory that is connected to the CPU 10a.

The CPU 10 includes a memory controller 12, a cache 13, and an I/O (input/output) controller 20. The CPU 10a includes a core 11a, a memory controller 12a, a cache 13a, and an I/O controller 20a. The core 11a, the memory controller 12a, the cache 13a, and the I/O controller 20a of the CPU 10a perform the same processes as those performed by a core 11, the memory controller 12, the cache 13, and the I/O (input/output) controller 20 of the CPU 10 and therefore the descriptions thereof will be omitted below.

The core 11 is a main unit of the CPU 10. The core 11 performs various arithmetic operation processes by using data stored in the cache 13 or the memory 14 and stores the data obtained by the various arithmetic processes in the cache 13 and the memory 14. When transmitting data to the CPU 10a, the core 11 stores the data to be transmitted in the cache 13 and requests the I/O controller 20 to transmit the data stored in the cache 13 to the CPU 10a. The memory controller 12 is a control device that reads out the data stored in the memory 14 and writes data in the memory 14.

The I/O controller 20 is an input/output device that transmits/receives data between the I/O controller 20 and the I/O controller 20a of the CPU 10a. When evaluating a transfer path, the I/O controller 20 increases the rate of use of each serial transfer path and then evaluates each serial transfer path at high speed.

Specifically, when the data transmitted from the cache 13 to the I/O controller 20 is interrupted, the I/O controller 20 transmits dummy data to the I/O controller 20a to increase the rate of use of the transfer paths so that it is close to 100%. When data to be transmitted from the cache 13 to the I/O controller 20a occurs, the I/O controller 20 stops the transmission of dummy data and performs a normal transmission process.

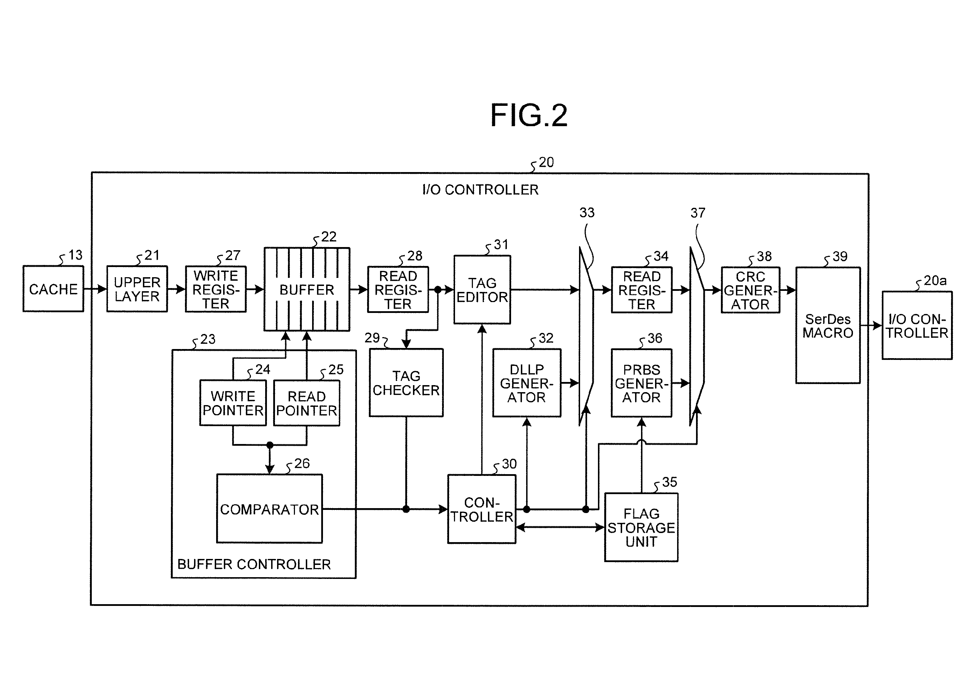

The processes performed by the I/O controller 20 will be described in detail below using the drawings. FIG. 2 is a diagram illustrating an exemplary I/O controller according to the first embodiment. FIG. 2 depicts a part of the I/O controller 20 where the data is transmitted to the I/O controller 20a of the CPU 10a. FIG. 2 also depicts a part of the I/O controller 20 where data is transmitted using a single serial transfer path.

In the example depicted in FIG. 2, the I/O controller 20 includes an upper layer 21, a buffer 22, a buffer controller 23, a write register 27, a read register 28, a tag checker 29, a controller 30, a tag editor 31, and a DLLP (data link layer packet) generator 32. The I/O controller 20 further includes a multiplexer 33, a read register 34, a flag storage unit 35, a PRBS (pseudo-random bit sequence) generator 36, and a multiplexer 37. The I/O controller 20 further includes a CRC (cyclic redundancy check) generator 38 and a SerDes (serializer/Deserializer) macro 39.

The buffer controller 23 includes a write pointer 24, a read pointer 25, and a comparator 26. In the example illustrated in FIG. 2, the buffer 22, the buffer controller 23, the write register 27, the read register 28, the tag checker 29, the controller 30, the tag editor 31, the DLLP generator 32, the multiplexer 33, the read register 34, the flag storage unit 35, and the PRBS generator 36 operate in accordance with the operation clocks of the I/O controller 20.

When the upper layer 21 acquires data transmitted from the cache 13, the upper layer 21 divides the acquired data, i.e., a TLP (transaction layer packet), into segments of tagged 8-byte data and stores each segment of the divided data in the write register 27.

The buffer 22 is a buffer that stores data to be transmitted to the I/O controller 20a that is an opposing device. In other words, the buffer 22 includes entries that store data to be transmitted to the I/O controller 20a. Specifically, the buffer 22 stores the packet data divided into segments of tagged 8-byte data in each storage area.

The buffer controller 23 controls storing of data in the buffer 22 and the reading of data from the buffer 22. Specifically, the buffer controller 23 includes the write pointer 24 and the read pointer 25.

The write pointer 24 indicates an address of a storage area in which new data is to be stored among the storage areas of the buffer 22. In other words, the write pointer 24 indicates an entry in the buffer 22 in which new data is to be written. When the divided data is transmitted from the write register 27 to the buffer 22, the buffer controller 23 stores the transmitted data in a storage area corresponding to the address indicated by the write pointer 24. Each time data is stored in the buffer 22, the buffer controller 23 increments by 1 the address indicated by the write pointer. In other words, the buffer controller 23 sequentially stores segments of the divided data in each storage area of the buffer 22.

The read pointer 25 indicates the address of the area in which data to be read next is stored among the storage areas of the buffer 22. In other words, the read pointer 25 indicates an entry in the buffer from which data is read. When the read register 28 reads new data stored in the buffer 22, the buffer controller 23 causes the read register 28 to read the data stored in a storage area corresponding to the address indicated by the read pointer 25. When the read register 28 reads data, the buffer controller 23 increments by one the address indicated by the read pointer 25. In other words, when the read register 28 reads data stored in the buffer 22, the buffer controller 23 causes the read register 28 to read each segment of the data stored in the buffer 22 in the order in which the segments of data are stored.

The comparator 26 determines whether the buffer 22 is empty or not. Specifically, the comparator 26 compares the address indicated by the write pointer 24 and the address indicated by the read pointer 25 with each other. When the address stored by the write pointer 24 and the address stored by the read pointer 25 are identical, the comparator 26 notifies the controller 30 that the buffer 22 is empty. In other words, when there is a gap between the TLP with which the divided data is being transmitted and the TLP to be transmitted next, the comparator 26 notifies the controller 30 that the buffer 22 is empty.

When there is a transition from the state where the address indicated by the write pointer 24 and the address indicated by the read pointer 25 are identical to a state where the address indicated by the write pointer 24 and the address indicated by the read pointer 25 are not identical, the comparator 26 notifies the controller 30 that new data is stored in the buffer 22. A case where the address indicated by the write pointer 24 and the address indicated by the read pointer 25 are not identical is, for example, when there is data that has not been read in the data written in the buffer 22 or when new data is written in the buffer 22 after the data written in the buffer 22 is all read.

Upon acquiring the data divided into eight bytes from the upper layer 21, the write register 27 stores the acquired data. The write register 27 stores the data that the write register 27 stores in the area indicated by the address that the read pointer 25 stores out of the storage areas of the buffer 22.

The read register 28 reads the data stored in the area indicated by the address stored by the read pointer 25 among the storage areas of the buffer 22. The read register 28 then transmits the read data to the tag editor 31.

The tag checker 29 determines the type of tag attached to the data that is output by the read register 28 to the tag editor 31. The tag checker 29 then notifies the controller 30 of the determined type of tag. For example, when the tag attached to the data output by the read register 28 to the tag editor 31 is a tag "STP (start TLP)" indicating a start cycle of the TLP, the tag checker 29 notifies the controller 30 that the tag indicates the start cycle. When the tag attached to the data output by the read register 28 to the tag editor 31 is an "END" tag indicating a final cycle of the TLP, the tag checker 29 notifies the controller 30 that the tag indicates the final cycle. In other words, when the final data to be transmitted to the I/O controller 20a is detected, the tag checker 29 notifies the controller 30 of the detection.

When the comparator 26 determines that the buffer 22 is empty and when the controller 30 receives the notification that the buffer 22 is empty from the comparator 26 and receives the notification that a tag is "END" from the tag checker 29, the controller 30 performs the following process. The controller 30 notifies the tag editor 31 that the "END" tag is converted to a "DPS (dummy packet mode start)" tag indicating that dummy data is to be transmitted and stores a flag indicating generation of the dummy data in the flag storage unit 35. In other words, the controller 30 stores, in the flag storage unit 35, the flag indicating a dummy mode in which the dummy data is transmitted to the I/O controller 20a.

The controller 30 transmits, to the multiplexer 37, a signal indicating that the output from the PRBS generator 36 is transmitted to the CRC generator 38 at the time when the data whose tag has been converted by the tag editor 31 is output from the read register 34 to the CRC generator 38.

When the controller 30 receives, from the comparator 26, the notification that new data is stored in the buffer 22, the controller 30 performs the following process. The controller 30 deletes the flag indicating generation of dummy data, which is the flag stored in the flag storage unit 35, and transmits, to the multiplexer 37, a signal indicating that the output from the read register 34 is conveyed to the CRC generator 38. The controller 30 notifies the DLLP generator 32 that a DLLP packet is generated and transmits, to the multiplexer 33, a signal indicating that the output from the DLLP generator 32 is conveyed to the read register 34.

When the comparator 26 determines that the buffer 22 is empty, the tag editor 31 attaches, to the data that is the final data transmitted from the buffer 22, the information indicating that dummy data is to be transmitted. Specifically, when the tag editor 31 receives, from the controller 30, notification that the "END" tag is converted to a "DPS" tag, the tag editor 31 perform the following process. The tag editor 31 converts the "END" tag indicating the final cycle of TLP, among the 8-byte data received from the read register 28, to a "DPS" tag. The tag editor 31 then transmits the packet with the converted tag to the multiplexer 33. In other words, when the values indicated by the write pointer 24 and the read pointer 25 are identical and an "END" tag is stored in the packet stored in the read register 28, the tag editor 31 converts the "END" tag to a "DPS" tag.

When the comparator 26 determines that new data is stored in the empty buffer 22, the DLLP generator 32 transmits, to the multiplexer 33, data indicating that transmission of the generated dummy data is to be ended. For example, the DLLP generator 32 generates four 1-byte "DPE (dummy packet mode end)" tags indicating that transmission of dummy data is to be ended and outputs the generated DPE tags to the multiplexer 33. In other words, when the values of the write pointer 24 and the read pointer 25 mismatch, the DLLP generator 32 outputs a "DPE" tag indicating the end of the test.

The multiplexer 33 conveys the data that is transmitted by the tag editor 31 or the DLLP generated by the DLLP generator 32 to the read register 34. Specifically, when the multiplexer 33 receives, from the controller 30, a signal indicating that the output of the tag editor 31 is to be conveyed to the read register 34, the multiplexer 33 conveys the output of the tag editor 31 to the read register 34. When the multiplexer 33 receives, from the controller 30, a signal indicating that the output of the DLLP generator 32 is to be output to the read register 34, the multiplexer 33 conveys the DLLP, which is the output from the DLLP generator 32, to the read register 34.

The read register 34 receives the data or the DLLP from the multiplexer 33. The read register 34 then outputs the received data or the DLLP to the multiplexer 37. The read register 34 is a register that controls the timing with which the data output by the tag editor 31, the DLLP output by the DLLP generator 32, or the PRBS generated by the PRBS generator 36 is conveyed to the CRC generator 38.

The flag storage unit 35 is a storage unit that stores the flag indicating generation of dummy data. For example, the flag storage unit 35 is a 1-bit register and, when the controller 30 causes the PRBS generator 36 to generate dummy data, the flag storage unit 35 stores a flag "1". In such a case, the flag storage unit 35 maintains the output of "1" to the PRBS generator.

When the comparator 26 determines that the buffer 22 is empty, the PRBS generator 36 generates dummy data. When the comparator 26 determines that new data is stored in the empty buffer 22, the PRBS generator 36 stops generating dummy data.

Specifically, when the controller 30 stores, in the flag storage unit 35, a flag indicating generation of dummy data as a result of the determination by the comparator 26 that the buffer 22 is empty, the PRBS generator 36 outputs a PRBS as dummy data to the multiplexer 37. For example, while receiving, from the flag storage unit 35, the output of "1" indicating generation of dummy data, the PRBS generator 36 outputs the PRBS to the multiplexer 37.

When the controller 30 deletes the flag in the flag storage unit 35 as a result of the determination by the comparator 26 that new data is stored in the empty buffer 22, the PRBS generator 36 stops outputting the PRBS. For example, when the output of "1" indicating generation of dummy data from the flag storage unit 35 stops, the PRBS generator 36 stops outputting the PRBS. In other words, when the final data to be transmitted to the I/O controller 20a is detected, the PRBS generator 36 generates test data for testing the transfer path and the I/O controller 20a.

The multiplexer 37 is similar to the multiplexer 33 in that when the multiplexer 37 receives, from the controller 30, a signal indicating that the output of the read register 34 is to be conveyed to the CRC generator 38, the multiplexer 37 outputs the output from the read register 34 to the CRC generator 38. Furthermore, when the multiplexer 37 receives, from the controller 30, a signal indicating that the output from the PRBS generator 36 is conveyed to the CRC generator 38, the multiplexer 37 outputs the PRBS generated by the PRBS generator 36 to the CRC generator 38.

The CRC generator 38 calculates a CRC used for checking the redundancy cycle of the data transmitted by the SerDes macro 39 and transmits the calculated CRC to the SerDes macro 39. Specifically, after receiving each type of data from the multiplexer 37 and analyzing the received data, the CRC generator 38 transmits the data to the SerDes macro 39. When the received data contains the "END" tag, the "DPS" tag, or the "DEP" tag, the CRC generator 38 generates a CRC of the analyzed data and transmits the generated CRC to the SerDes macro 39 after transmitting the data.

When the buffer 22 is not empty, the SerDes macro 39 transmits the data stored in the buffer 22 to the I/O controller 20a. When the buffer 22 is empty, the SerDes macro 39 transmits the PRBS generated by the PRBS generator 36 to the I/O controller 20a. When new data is stored in the empty buffer 22, the SerDes macro 39 transmits, to the I/O controller 20a, data indicating that the transmission of dummy data is to be ended.

Specifically, the SerDes macro 39 converts the data received from the multiplexer 37 to serial data and transmits the converted serial data to the I/O controller 20a via a serial transfer path. For example, when the buffer 22 stores divided data, the SerDes macro 39 acquires the divided data and transmits the acquired data to the I/O controller 20a.

When the buffer 22 is empty, the SerDes macro 39 transmits the data whose "END" tag is converted to the "DPS" tag to the I/O controller 20a. When new data is stored in the empty buffer 22, the SerDes macro 39 transmits a DLLP containing a "DPE" tag to the I/O controller 20a.

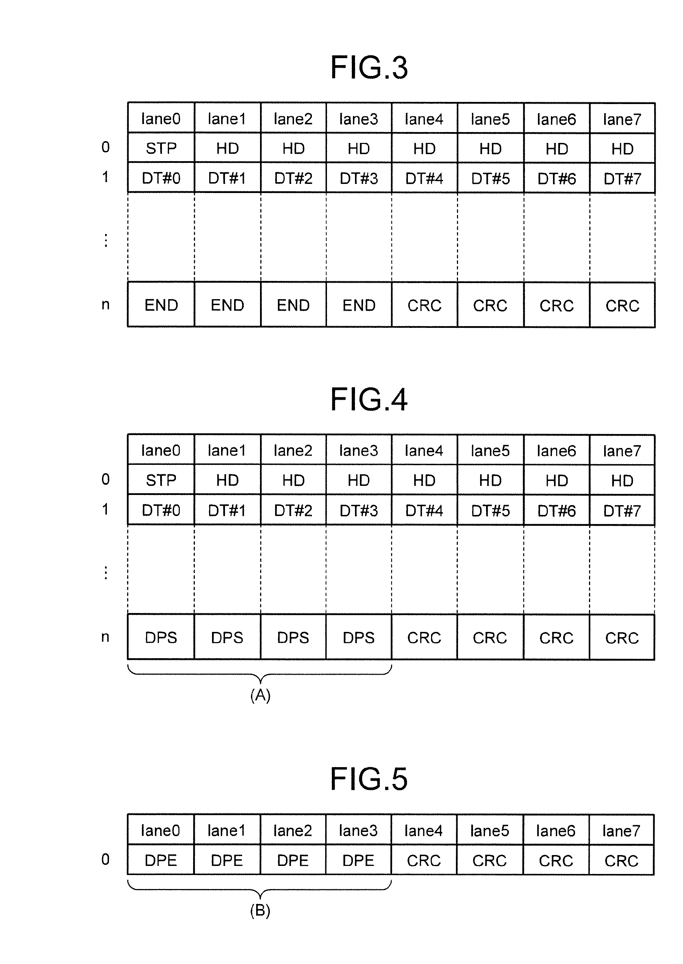

Exemplary data transmitted by the transmitting I/O controller 20 will be described below using the drawings. First, normal data transmitted by the I/O controller 20 will be described using FIG. 3. FIG. 3 is a table illustrating exemplary data transmitted by the I/O controller according to the first embodiment.

In the example illustrated in FIG. 3, the packet is divided into eight segments of 1-byte data and the segments of 1-byte data are arrayed in eight lanes (1 byte x 8 lanes) lane0 to lane7. This is the data of eight bytes arrayed in a row, i.e., data transmitted to the I/O controller 20a via a single bus during one cycle. In other words, data of eight bytes arrayed in a row, i.e., data in one cycle, is stored in the buffer 22 and output from the buffer 22 in one cycle. FIG. 3 depicts an example in which one TLP is divided into data of n cycles.

Among the 1-byte data illustrated inf FIG.3, "STP" is a tag indicating a start cycle of a TLP and "HD (header)" is a header that controls the TLP. The following information is stored in the header: the size of the packet, and the address to which the packet is transmitted. "DT#0 to #7" in FIG. 3 is data to be transmitted to the I/O controller 20a. In the example depicted in FIG. 3, a CRC of a 32-bit width is attached.

The upper layer 21 divides the data acquired from the cache 13 to segments of 8-byte data as depicted in FIG. 3 and transmits divided 8-byte data to the write register 27 in each cycle. The CRC generator 38 analyzes the data from the "STP" tag in lane0 at the 0th cycle to the "END" tag in lane3 at the nth cycle and generates a CRC of a 32-bit width from the analyzed data.

Exemplary data transmitted by the I/O controller 20 just before transmitting dummy data, i.e., data that is transmitted when the "END" tag is changed to a "DPS" tag, will be described by using FIG. 4. FIG. 4 is a table illustrating exemplary data transmitted by the I/O controller according to the first embodiment just before transmitting a dummy packet.

FIG. 4 depicts the example in which, as depicted in FIG. 3, one TLP is divided into n cycles each of 8 bytes (1 byte x 8 lanes). For example, when the tag editor 31 receives the 8-byte data of the nth cycle, the tag editor 31 is notified by the controller 30 that the "END" tag is to be changed to a "DPS" tag. In such a case, as depicted in (A) of FIG. 4, the tag editor 31 converts the "END" tags in lane0 to lane3 of the nth cycle to "DPS" tags. The I/O controller 20 then attaches, to the converted data, the CRC of the tags from the "STP" tag represented in lane0 of the 0th cycle to the "DPS" tag represented in lane3 of the nth cycle and the tag editor 31 then transmits the data attached with the CRC to the I/O controller 20a.

The data transmitted by the I/O controller 20 when transmission of dummy data is to be ended will be described by using FIG. 5. FIG. 5 is a table illustrating data transmitted by the I/O controller according to the first embodiment when transmission of dummy data is ended. For example, as depicted in (B) of FIG. 5, the DLLP generator 32 generates "DPE" indicating that transmission of dummy data is to be ended. Thereafter, the I/O controller 20 transmits, to the I/O controller 20a, the DLLP in which "CRC" calculated by calculating each cycle from "DPS" to "DPE" is attached to "DPE" .

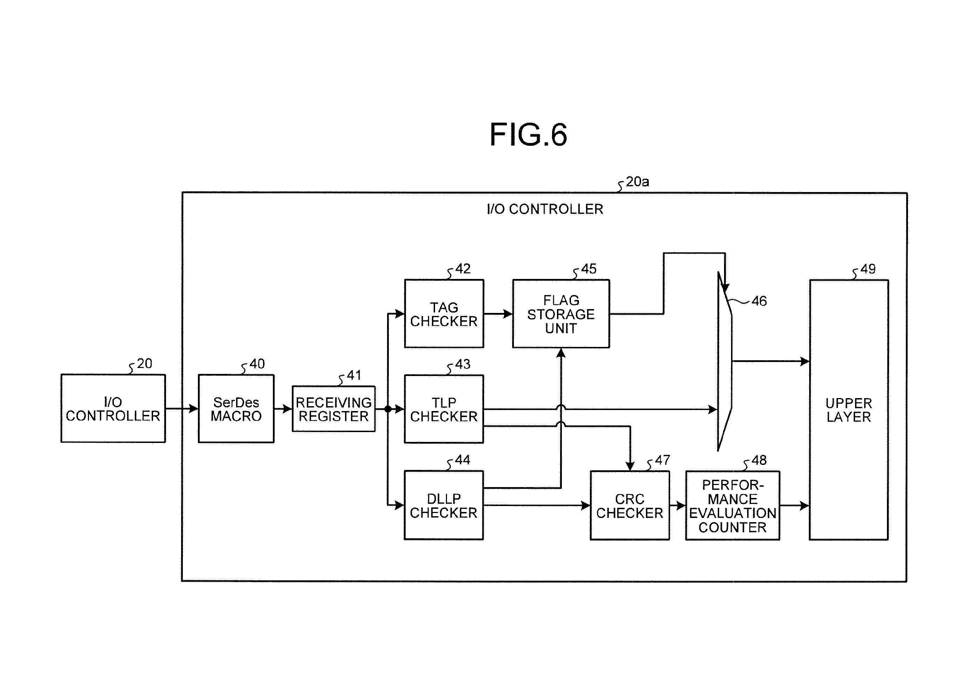

A process performed by the receiving I/O controller 20a will be described by using FIG. 6. FIG. 6 is a diagram illustrating a process performed by the receiving I/O controller according to the first embodiment. FIG. 6 depicts a part of the I/O controller 20a where a process of receiving each item of from the I/O controller 20 is performed. FIG. 6 also depicts a part of the I/O controller 20a where data is received via a single serial transfer path. To summarize, the I/O controller 20a includes, in each transfer path, a SerDes macro 40, a receiving register 41, a tag checker 42, a TLP checker 43, a DLLP checker 44, a flag storage unit 45, a multiplexer 46, a CRC checker 47, a performance evaluation counter 48, and an upper layer 49.

The I/O controller 20a includes, in addition to the units 40 to 49 depicted in FIG. 6, units that have the same functions as those of the units depicted in FIG. 2. Similarly, the I/O controller 20 includes units that have the same functions as those of the units 40 to 49 depicted in FIG. 6.

In the example depicted in FIG. 6, the I/O controller 20a includes the SerDes macro 40, the receiving register 41, the tag checker 42, the TLP checker 43, the DLLP checker 44, the flag storage unit 45, the multiplexer 46, the CRC checker 47, the performance evaluation counter 48, and the upper layer 49. The SerDes macro 40 receives serial data from the SerDes macro 39 of the I/O controller 20 via a serial transfer path.

The SerDes macro 40 converts the received serial data to 8-byte data and stores the converted data in the receiving register 41. The receiving register 41 outputs the 8-byte data received from the SerDes macro 40 to the tag checker 42, the TLP checker 43, and the DLLP checker 44.

The tag checker 42 analyzes the data received from the receiving register 41 and detects "DPS" tags. When the tag checker 42 detects a "DPS" tag, the tag checker 42 stores a flag indicating that dummy data is to be transmitted in the flag storage unit 45. In other words, the tag checker 42 stores a flag indicating a dummy mode in which dummy data is transmitted.

When the TLP checker 43 receives data from the receiving register 41, the TLP checker 43 analyzes tags contained in the received data and determines whether the received data is TLP data. When the received data is TLP data, the TLP checker 43 transmits the received data to the multiplexer 46. When the TLP checker 43 receives data having "END" and "DPS", the TLP checker 43 notifies the CRC checker 47 of "END" or "CRC" attached to "DPS".

When the DLLP checker 44 receives data from the receiving register 41, the DLLP checker 44 analyzes tags contained in the received data and determines whether the received data is a DLLP having "DPE". When the DLLP checker 44 determines that the received data is a DLLP having "DPE", the DLLP checker 44 deletes the flag stored in the flag storage unit 45. The DLLP checker 44 transmits the received data to the CRC checker 47. When the DLLP checker 44 receives data having "DPE", the DLLP checker 44 notifies the CRC checker 47 of "CRC" attached to "DPE".

When a flag indicating a dummy mode is stored in the flag storage unit 45, the flag storage unit 45 outputs, to the multiplexer 46, a signal indicating that output of data is to be stopped. When no flag is stored, the flag storage unit 45 outputs a signal indicating that the output of the TLP checker 43 is output to the upper layer 49. For example, when the flag storage unit 45 is a 1-bit register and "1" indicating a dummy mode is stored as a flag, the flag storage unit 45 maintains the output of "1" indicating a dummy mode to the multiplexer 46.

When the multiplexer 46 acquires, from the TLP checker 43, the data received from the I/O controller 20 while receiving a signal indicating that the output of the TLP checker 43 is to be output to the upper layer 49, the multiplexer 46 conveys the received data to the upper layer 49. When the multiplexer 46 acquires, from the TLP checker 43, the data received from the I/O controller 20 while receiving a signal indicating that the output of data is to be stopped, the multiplexer 46 does not convey the received data to the upper layer 49 but discards the data.

When the CRC checker 47 receives data from the TLP checker 43 or the DLLP checker 44, the CRC checker 47 detects any error in the data received from the I/O controller 20 by analyzing the received data and performing a CRC check. When the CRC checker 47 detects an error, the CRC checker 47 notifies the performance evaluation counter 48 of the detection of the error.

Specifically, the CRC checker 47 receives data from the TLP checker 43 and calculates a CRC of the received data. The CRC checker 47 then compares the CRC contained in the received data and the CRC calculated by the CRC checker 47. When the CRC contained in the received data and the CRC calculated by the CRC checker 47 are identical, the CRC checker 47 notifies the performance evaluation counter 48 that no error has been detected. When the CRC contained in the received data and the CRC calculated by the CRC checker 47 are not identical, the CRC checker 47 notifies the performance evaluation counter 48 that an error has been detected.

When the CRC checker 47 is notified by the DLLP checker 44 that "DPS" has been received, the CRC checker 47 detects any errors in the data received before receiving "DPE" from the DLLP checker 44. The CRC checker 47 notifies the performance evaluation counter 48 of the number of detected errors as the number of errors occurring in an error mode.

The performance evaluation counter 48 counts the number of errors occurring during the transfer. Specifically, the performance evaluation counter 48 counts notifications indicating detection of an error and received from the CRC checker 47 and then notifies the upper layer 49 of the counts. When the performance evaluation counter 48 receives, from the CRC checker 47, the notification of the number of errors occurring during the error mode, the performance evaluation counter 48 notifies the upper layer 49 of the received number of errors.

The upper layer 49 acquires only normal data from the data transmitted by the I/O controller 20 and does not receive any dummy data, i.e., a PRBS. The upper layer 49 acquires, from the performance evaluation counter 48, the number of errors occurring during a normal mode and the number of error occurring during the error mode.

For example, the buffer controller 23, the tag checker 29, the controller 30, the tag editor 31, the DLLP generator 32, the multiplexer 33, the PRBS generator 36, the multiplexer 37, the CRC generator 38, and the SerDes macro 39 are electronic circuits. The SerDes macro 40, the tag checker 42, the TLP checker 43, the DLLP checker 44, the multiplexer 46, the CRC checker 47, and the performance evaluation counter 48 are electronic circuits.

An integrated circuit, such as an ASIC (application specific integrated circuit) or an FPGA (field programmable gate array); a CPU (central processing unit); and an MPU (micro processing unit) are used as exemplary electronic circuits.

The buffer 22, the write register 27, the read register 28, the read register 34, the flag storage unit 35, the receiving register 41, and the flag storage unit 45 are storage devices. Here, semiconductor memory devices, such as a RAM (random access memory), a ROM (read only memory), and a flash memory, are used as exemplary memory devices.

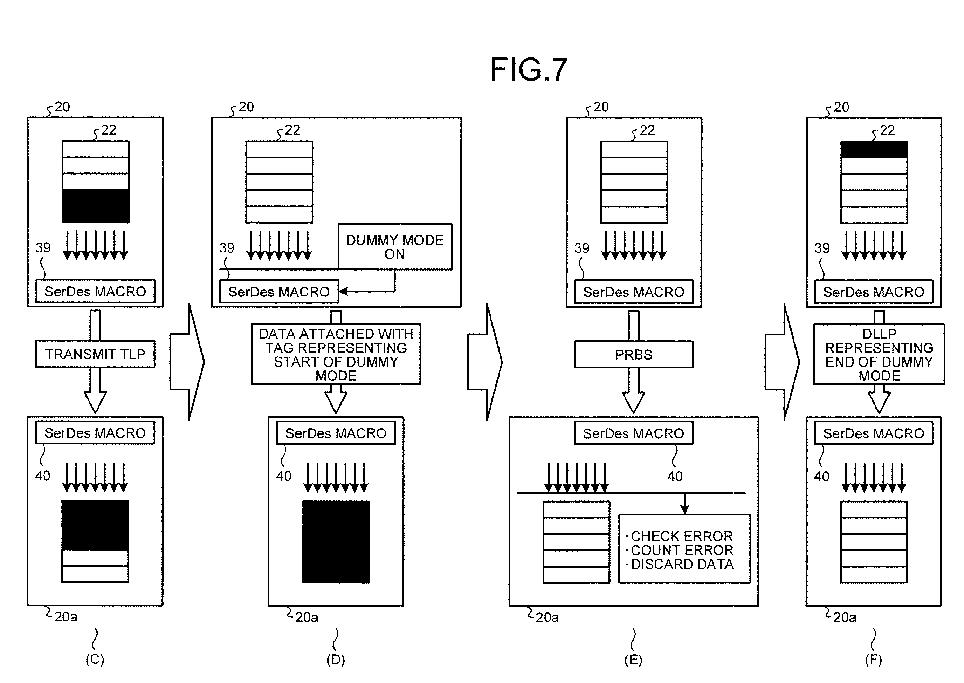

Processes of transiting to a dummy mode during data transmission performed by the I/O controller 20 and the I/O controller 20a will be described here. FIG. 7 is a diagram illustrating processes of transiting to a dummy mode performed by the I/O controllers according to the first embodiment.

First, as depicted in (C) of FIG. 7, in the normal state, the I/O controller 20 transmits each segment of data stored in the buffer 22 to the I/O controller 20a. As depicted in (D) in FIG. 7, when the buffer 22 is empty, the I/O controller 20 turns on the dummy mode and transmits data attached with a "DPS" tag indicating starting of the dummy mode to the I/O controller 20a. In other words, when the buffer 22 is empty, the I/O controller 20 attaches a "DPS" tag to the final data to be transmitted and thus notifies the I/O controller 20a that an evaluation on a transfer path is to be started.

As depicted in (E) of FIG. 7, the I/O controller 20 transmits a PRBS as dummy data to the I/O controller 20a. Because the I/O controller 20a has received the notification indicating that an evaluation on the transfer path is to be started, i.e., the notification of starting of a dummy mode, the I/O controller 20a performs a PRBS error check, counts errors, and does not transfer the received PRBS but discards it.

As depicted in (F) of FIG. 7, when new data is stored in the buffer 22, the I/O controller 20 transmits a DLLP indicating that the dummy mode is to be ended. When the I/O controller 20a receives the DLLP indicating that the dummy mode is to be ended, the I/O controller 20a conveys only the result of error counting and then returns to the normal receiving operation.

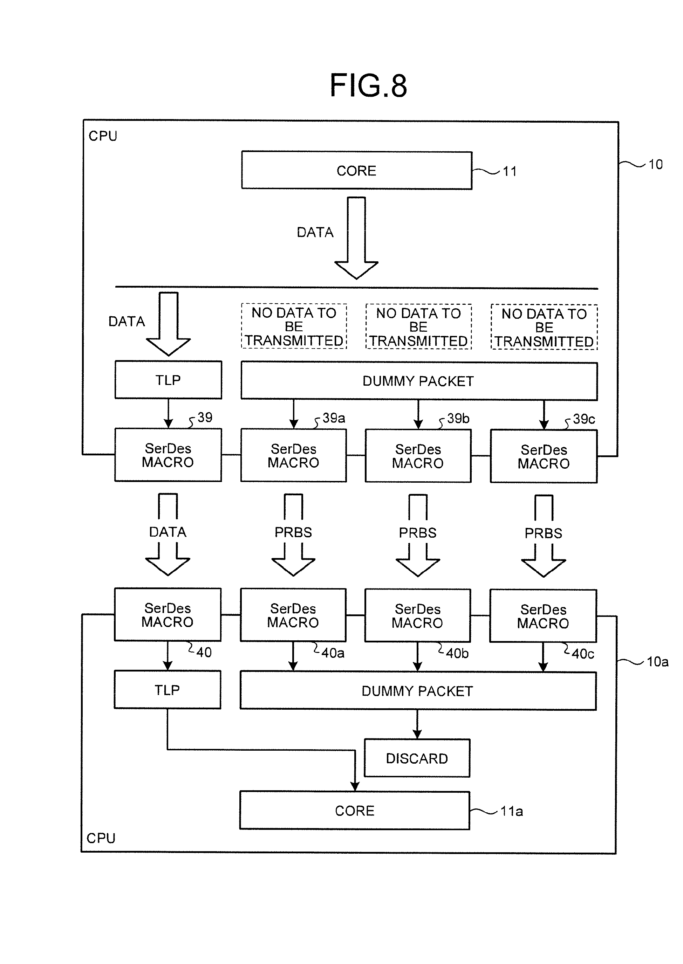

Processes of transmitting and receiving data via multiple serial transfer paths and of performing an evaluation test on each of the serial transfer paths in a normal state, which are processes performed by the CPU 10 including the I/O controller 20 and the CPU 10a including the I/O controller 20a, will be described here using FIG. 8. FIG. 8 is a diagram illustrating the processes of performing evaluation tests in a normal state on multiple transfer paths, which are processes performed by a CPU according to the first embodiment.

In the example depicted in FIG. 8, the CPU 10 and the CPU 10a are connected with four serial transfer paths. The CPU 10 includes SerDes macros 39 to 39c for the respective serial transfer paths and the CPU 10a includes SerDes macros 40 to 40c for the respective serial transfer paths. In the CPU 10, the components that have the same functions as those of the buffer 22, the buffer controller 23, the write register 27, the read register 28, the tag checker 29, the controller 30, the tag editor 31, the DLLP generator 32, the multiplexer 33, the read register 34, the flag storage unit 35, the PRBS generator 36, the multiplexer 33, the read register 34, the flag storage unit 35, the PRBS generator 36, the multiplexer 37, and the CRC generator 38 illustrated in FIG. 2 are provided to each of the SerDes macros 39 to 39c. In the CPU 10a, components that have the same functions as those of the receiving register 41, the tag checker 42, the TLP checker 43, the DLLP checker 44, the flag storage unit 45, the multiplexer 46, the CRC checker 47, and the performance evaluation counter 48 illustrated in FIG. 6 are provided to each of the SerDes macros 40 to 40c.

The CPU 10 determines whether the buffer is empty and accordingly determines whether data is being transmitted via each serial transfer path with respect to each serial transfer path. In the example depicted in FIG. 8, the CPU 10 determines that the SerDes macro 39 is transmitting one TLP and that SerDes macros 39a to 39c other than the SerDes macro 39 are transmitting no data. In other words, the CPU 10 determines that the buffer that stores the data to be transmitted by each of the SerDes macros 39a to 39c is empty.

In such a case, the CPU 10 causes normal data to be transmitted in the SerDes macro 39 and causes a PRBS to be transmitted in each of the SerDes macros 39a to 39 so as to increase the rate of use of each transfer path so that it is close to 100%. The CPU 10a causes the SerDes macro 40 to receive the data and to transmit the received data to the core 11a via the upper layer. The CPU 10a only detects and counts errors regarding the PRBS received by SerDes macros 40a to 40c and then discards the PRBS.

As described above, the CPU 10 and the CPU 10a evaluates the transfer paths by determining, on each serial transfer path, whether there is data being transmitted and by transmitting a PRBS along a serial transfer path for which there is no data to be transmitted. For this reason, the CPU 10 and the CPU 10a can evaluate each transfer path while performing a normal data transfer process.

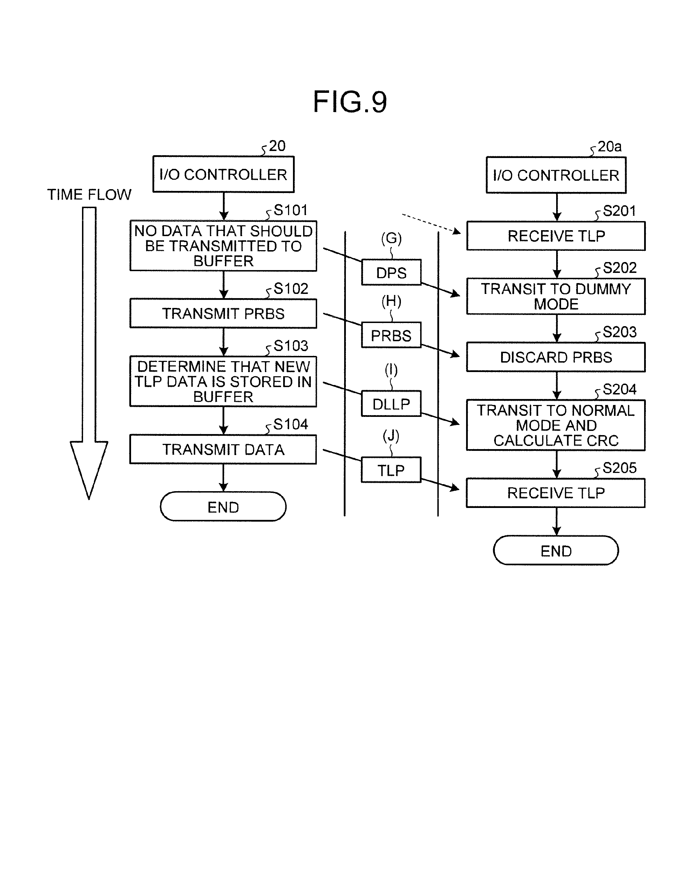

Flows of processes performed by the I/O controller 20 and the I/O controller 20a will be described using FIG. 9. FIG. 9 is a diagram illustrating flows of processes performed by the I/O controllers according to the first embodiment. FIG. 9 depicts the flow, in chronological order from top to bottom of the figure, of the process performed by the I/O controller 20 and the flow of the process performed by the I/O controller 20a.

The flow of the process performed by the I/O controller 20 will be described first. When there is no data that will be transmitted to the buffer 22, i.e., when the I/O controller 20 determines that the buffer 22 is empty, the I/O controller 20 performs the following process. As depicted in (G) of FIG. 9, the I/O controller 20 transmits the data attached with "DPS" to the I/O controller 20a (step S101).

The I/O controller 20 generates a PRBS and, as depicted in (H) in FIG. 9, transmits the PRBS to the I/O controller 20a (step S102). When the I/O controller 20 determines that new TLP data is stored in the buffer 22, as depicted in (I) in FIG. 9, the I/O controller 20 transmits a DLLP indicating the end of the dummy mode to the I/O controller 20a (step S103). As depicted in (J) in FIG. 9, the I/O controller 20 then transmits the TLP data to the I/O controller 20a (step S104).

The flow of the process performed by the I/O controller 20a will be described here. The I/O controller 20a receives the TLP transmitted by the I/O controller 20 prior to step S101 as depicted by the dotted line in FIG. 9 (step S201). When the I/O controller 20a receives the data attached with "DPS" as depicted in (G) of FIG. 9, the I/O controller 20a transits to the dummy mode (step S202).

When the I/O controller 20a receives the PRBS from the I/O controller 20 as depicted in (H) of FIG. 9, the I/O controller 20a only detects errors and discards the received PRBS (step S203). When the I/O controller 20a receives a DLLP as depicted in (I) of FIG. 9, the I/O controller 20a transits to a normal mode, calculates a CRC regarding the received PRBS, and detects and counts errors (step S204). The I/O controller 20a then receives the TLP transmitted by the I/O controller 20 as depicted in (J) of FIG. 9 (step S205).

### [Effects of First Embodiment]

As described above, the I/O controller 20 includes the buffer 22 that stores the data to be transmitted to the I/O controller 20a and transmits the data stored in the buffer 22 to the I/O controller 20a. The I/O controller 20 determines whether the buffer 22 is empty and, when the I/O controller 20 determines that the buffer 22 is empty, i.e., when the final data among the data stored in each entry in the buffer 22 is transmitted, the I/O controller 20 transmits a PRBS as dummy data. Thus, the I/O controller 20 can appropriately perform transfer evaluation on the I/O controller 20a and the transfer paths. In other words, when there is a gap after the TLP is transmitted to the I/O controller 20a until a new TLP is transmitted, the I/O controller 20 transmits a PRBS as dummy data. For this reason, the information processing system 1 can maintain the rate of use of the transfer paths at approximately 100% while performing the normal data communication process. As a result, the information processing system 1 can evaluate the transfer paths in a short time.

The I/O controller 20 includes the write register 27 that indicates an entry in the buffer 22 in which data is written, the read pointer 25 that indicates an entry in the buffer 22 from which data is read, and the read register 28 that stores the data read from the buffer 22. The I/O controller 20 further includes the comparator 26 that compares the entry indicated by the write pointer 24 and the entry indicated by the read pointer 25 with each other and the tag checker 29 that detects whether the data stored in the read register 28 is the final data to be transmitted to the I/O controller 20a.

The I/O controller 20a includes the controller 30 that, when the value indicated by the write pointer 24 and the value indicated by the read pointer 25 are identical and it is detected that the data stored in the read register 28 is the final data to be transmitted to the I/O controller 20a, causes the dummy data generated by the PRBS generator 36 to be transmitted to the I/O controller 20a. Thus, the I/O controller 20a can correctly time the transmission of dummy data and appropriately evaluate the transfer paths.

In addition, when the value indicated by the write pointer 24 and the value indicated by the read pointer 25 are identical and it is detected that the data stored in the read register 28 is the final data to be transmitted to the I/O controller 20a, the I/O controller 20a inserts a "DPS" tag to replace the "END" tag stored in the final data.

In other words, the I/O controller 20 attaches information indicating that dummy data is to be transmitted to the final data to be transmitted from the buffer 22. When information indicating that dummy data is to be transmitted is attached to the data, the I/O controller 20a transits to a dummy mode and discards the data received thereafter, i.e., dummy data. Accordingly, the I/O controller 20 can transmit a PRBS without a gap after the TLP transmission ends. As a result, the I/O controller 20 can maintain the rate of use of the transfer paths so that it is close to 100% and appropriately evaluate the transfer paths.

The I/O controller 20 replaces the "END" tag of the final data to be transmitted with a "DPS" tag. Accordingly, the I/O controller 20 can notify the I/O controller 20a that dummy data is to be transmitted without increasing the time to transmit data. As a result, the I/O controller 20 can maintain the rate of use of the transfer paths so that it is close to 100% and appropriately evaluate the transfer paths.

When the value indicated by the write pointer 24 and the value indicated by the read pointer 25 are not identical, the I/O controller 20 transmits, to the I/O controller 20a, dummy data into which a "DPE" tag indicating that the test is to be stopped is inserted. In other words, when new TLP data is stored in the empty buffer 22, the I/O controller 20 generates a DLLP having "DPE" and transmits the generated DLLP to the I/O controller 20a. When the I/O controller 20a receives the DLLP having "DPE", the I/O controller 20a ends the dummy mode and transits to normal operations. For this reason, the I/O controller 20 can evaluate the transfer paths while maintaining each transfer path in a normal state wherever possible.

The I/O controller 20 is connected to the I/O controller 20a via the multiple transfer paths. The I/O controller 20 includes, for each transmission path, the same elements as those of the buffer 22, the write pointer 24, the read pointer 25, the tag checker 29, the controller 30, the tag editor 31, the DLLP generator 32, the PRBS generator 36, and the SerDes macro 39. The I/O controller 20 and the I/O controller 20a are connected via the multiple transfer paths and perform the above-described processing independently for each transfer path. Thus, the I/O controller 20 can appropriately evaluate the transfer paths between the CPU 10 and the CPU 10a that are connected via the multi-links. Even if a bias occurs and a bottleneck occurs in a transfer path that transmits a TLP, the I/O controller 20 can maintains the rate of use of other transfer paths at approximately 100%, thereby appropriately evaluating the transfer paths.

In contrast, the I/O controller 20a detects from the received data and a PRBS that is dummy data. In addition, the I/O controller 20a transfers only the data to the upper layer 49 and discards the PRBS that is dummy data. Thus, the information processing system 1 including the I/O controller 20 and the I/O controller 20a can appropriately evaluate the transfer paths.

By maintaining the transmission of a PRBS, the information processing system 1 puts loads on the transfer paths. In other words, by concentrating on the load on the physical layer in the transfer paths, the information processing system 1 can put loads on the transfer paths without increasing the scale of the circuit.

Because the information processing system 1 maintains the rate of use of the transfer paths at approximately 100% with the operation frequency of the SerDes macro 39 at the operation frequency in the normal operation state, the I/O controller 20a can appropriately detect errors. As a result, the information processing system 1 can perform high-quality transfer evaluation. In addition, because the information processing system 1 transmits a PRBS during normal data communication processes, the patterns of data flowing in the transfer paths are not uniform and accordingly the transfer paths can be evaluated appropriately.

The I/O controller 20a does not convey the PRBS that is dummy data to the upper layer 49 but discards it. Thus, the information processing system 1 can reduce the load on the upper layer 49 when performing transfer evaluation. The information processing system 1 prevents a retransmission process when an error occurs in the data transmitted via a serial transfer path and, as a result, the information processing system 1 can maintain the rate of use of the transfer paths at approximately 100% and thus can appropriately evaluate the transfer paths.

The I/O controller 20a detects errors occurring in the PRBS that is dummy data and transfers the number of times an error is detected to the upper layer 49. Thus, the information processing system 1 can appropriately determine the frequency with which errors occur in the paths via which the PRBS is transmitted.

### [b] Second Embodiment

The embodiment of the preset invention is described above. Various different embodiments other than the above-described embodiment may be carried out. Other embodiments included in the present invention will be described as a second embodiment.

### (1) Packet to be Transmitted

The above-described information processing system 1 transmits and receives a TLP between the CPU 10 and the CPU 10a. However, embodiments are not limited to this. Data other than packets may be transmitted. In other words, the CPU 10 may include a buffer that stores data to be transmitted to the CPU 10a and, when the buffer is empty, i.e., if there is a gap after the data is transmitted until new data is transmitted, dummy data may be transmitted. The I/O controller 20 attaches a 32-bit CRC. Alternatively, as long errors can be detected from the transmitted data, other algorithms, such as a hamming code, and a CRC containing an arbitrary number of bits may be used.

### (2) Division of Data

The above-described I/O controller 20 divides the TLP by each segment of 8 bytes. However, embodiments are not limited to this. Data may be divided into segments of data of an appropriate size in accordance with the number and state of transfer paths via which data is transmitted to the I/O controller 20a, i.e., serial transfer paths, the used transmission algorithm, etc.

### (3) "DPS" and "DPE"

When transmitting a PRBS that is dummy data, the I/O controller 20 changes the "END" tag to a "DPS" tag and transmits the PRBS. However, embodiments are not limited to this. The I/O controller 20 may transmit information indicating that dummy data is to be transmitted to the I/O controller 20a by using an arbitrary method. When ending transmission of dummy data, the I/O controller 20 transmits a DLLP to which a "DPE" tag is attached. However, embodiments are not limited to this. Arbitrary information indicating the end of transmission of dummy data may be transmitted.

### (4) Dummy data

The above-described I/O controller 20 transmits, as dummy data, a PRBS that is generated by the PRBS generator 36 to the I/O controller 20a. However, embodiments are not limited to this. For example, the I/O controller 20 may further include a storage unit that stores dummy data and, when the buffer 22 is empty, the I/O controller 20 may repeatedly transmit dummy data stored in the storage unit.

In one aspect, high-quality transfer evaluation is performed.

## Claims

1. A transmitting device (20) that is connected to a receiving device (20a) via a transfer path, the transmitting device (20) comprising:
a storage unit (22) that includes a plurality of entries to store data to be transmitted to the receiving device (20a);
a final data detecting unit (29) that detects final data to be transmitted to the receiving device (20a) among the data stored in the entries in the storage unit (22);
a test data generating unit (36) that generates test data for testing the transfer path and the receiving device (20a) when the final data detecting unit (29) detects the final data; and
a transmitter (39) that transmits the test data generated by the test data generating unit (36) to the receiving device (20a), after transmitting the final data detected by the final data detecting unit (29).

2. The transmitting device (20) according to claim 1, wherein
the final data detecting unit (29) includes:
a write pointer (24) that indicates an entry of the plurality of entries included in the storage unit (22) in which data is written;
a read pointer (25) that indicates an entry of the plurality of entries included in the storage unit (22) from which data is read;
a read register (28) that stores a segment of divided data read from the entry indicated by the read pointer (25);
a comparator (26) that compares the write pointer (24) and the read pointer (25) with each other; and
a detector (29) that detects whether the data stored in the read register (28) is the final data, and
the transmitter (39) transmits the test data generated by the test data generating unit (36) to the receiving device (20a) after transmitting the final data detected by the final data detecting unit (29), when a value indicated by the write pointer (24) and a value indicated by the read pointer (25) compared by the comparator (26) are identical and the detector (29) detects that the data stored in the read register (28) is the final data.

3. The transmitting device (20) according to claim 1 or claim 2, comprising:
a test controlling unit (31) that inserts test data transmission information data indicating that the test data is to be transmitted into the final data detected by the detector (29), when the value indicated by the write pointer (24) and the value indicated by the read pointer (25) compared by the comparator (26) are identical and the detector (29) detects that the data stored in the read register (28) is the final data.

4. The transmitting device (20) according to claim 3, wherein
the test controlling unit (31) generates data into which test stop information giving an instruction for stopping a test is inserted, when the value indicated by the write pointer (24) and the value indicated by the read pointer (25) compared by comparator (26) are not identical,and
the transmitter (39) transmits, to the receiving device (20a), the data into which the test stop information is inserted generated by the test controlling unit (31), after transmitting the test data generated by the test data generating unit (36) to the receiving device (20a).

5. The transmitting device (20) according to any one of claims 1 - 4, wherein
the transmitting device (20) is connected to the receiving device (20a) via multiple transfer paths
and the transmitting device (20) comprising, for each of the transfer path:
the storage unit (22);
the final data detecting unit (29);
the test controlling unit (31); and
the test data generating unit (36).

6. A transceiver system (1) comprising:
the transmitting device (20) according to claim 1; and
a receiving device (20a) that is connected to the transmitting device (20) via a transfer path,
the receiving device (20a) including:
a receiver (40) that receives data from the transmitting device (20); and
an error detector (47) that detects an error in the data that is received from the transmitting device (20) by the receiver (40).

7. The transceiver system (1) according to claim 6, wherein
the final data detecting unit (29) includes:
a write pointer (24) that indicates an entry of the plurality of entries included in the storage unit (22) in which data is written;
a read pointer (25) that indicates an entry of the plurality of entries included in the storage unit (22) from which data is read;
a read register (28) that stores a segment of divided data read from the entry indicated by the read pointer (25) ;
a comparator (26) that compares the write pointer (24) and the read pointer (25) with each other; and
a detector (29) that detects whether the data stored in the read register (28) is the final data, and
the transmitter (39) transmits the test data generated by the test data generating unit (36) to the receiving device (20a) after transmitting the final data detected by the final data detecting unit (29), when a value indicated by the write pointer (24) and a value indicated by the read pointer (25) compared by the comparator (26) are identical and the detector (29) detects that the data stored in the read register (28) is the final data.

8. The transceiver system (1) according to claim 6 or claim 7, wherein the transmitting device (20) further includes a test controlling unit (31) that inserts test data transmission information data indicating that the test data is to be transmitted into the final data detected by the detector (29), when the value indicated by the write pointer (24) and the value indicated by the read pointer (25) compared by the comparator (26) are identical and the detector (29) detects that the data stored in the read register (28) is the final data.

9. The transceiver system (1) according to claim 8, wherein
the test controlling unit (31) generates data into which test stop information giving an instruction for stopping a test is inserted, when the value indicated by the write pointer (24) and the value indicated by the read pointer (25) compared by comparator (26) are not identical,and
the transmitter (39) transmits, to the receiving device (20a), the data into which the test stop information is inserted generated by the test controlling unit (31), after transmitting the test data generated by the test data generating unit (36) to the receiving device (20a).

10. The transceiver system (1) according to any one of claims 6 - 9, wherein the receiving device (20a) further includes an error counter (48) that counts errors in the data from the transmitting device (20), which are errors detected by the error detector (47).

11. The transceiver system (1) according to any one of claims 6 - 10, wherein the receiving device (20a) further includes a discarding unit (46) that discards the test data from the transmitting device (20), when the receiver (40) receives the test data transmission information from the transmitting device (20).

12. The transceiver system (1) according to any one of claims 6 - 11, wherein
the transmitting device (20) is connected to the receiving device (20a) via multiple transfer paths
and the transmitting device (20) comprising, for each of the transfer path:
the storage unit (22);
the final data detecting unit (29);
the test controlling unit (31); and
the test data generating unit (36).

13. A method of controlling a transmitting device (20) that is connected to a receiving device (20a) via a transfer path, the method comprising:
detecting final data to be transmitted to the receiving device (20a) among the data stored in multiple entries, which stores segments of divided data obtained by dividing data to be transmitted to the receiving device (20a) in the storage device;
inserting test start information giving an instruction for starting a test into the final data;
generating test data for testing the transfer path and the receiving device (20a) on the basis of the test start information inserted into the final data; and
transmitting the generated test data to the transfer path, after transmitting the final data into which the test start information is inserted.
